# EUROPEAN PATENT SPECIFICATION

(11) **EP 0 512 805 B1**
(45) Date of publication and mention of the grant of the patent: **04.11.1998**
(21) Application number: 92304058.8
(22) Date of filing: 06.05.1992
(51) Int. Cl.: B23K 35/32, C23C 4/04, C22C 32/00

(54) **Hard surfacing alloy with precipitated metal carbides and process**
Hartauftraglegierung mit präzipitierte Metallkarbiden und Verfahren
Alliage pour rechargement dur contenant carbures de métaux précipités et procédé

(30) Priority: 07.05.1991 US 696836
(43) Date of publication of application: 11.11.1992
(73) Proprietor: WALL COLMONOY CORPORATION, Madison Heights, Michigan 48071 (US)
(72) Inventor: DuBois, Samuel C., Troy, Michigan 48084 (US)
(74) Representative: Austin, Hedley William

(56) References cited:
- DE-A- 2 814 350
- FR-A- 2 317 368
- GB-A- 791 229
- GB-A- 2 205 583
- US-A- 4 731 253
- PATENT ABSTRACTS OF JAPAN vol. 4, no. 186 (C-36)(668) 20 December 1980 & JP-A-55 125 249 ( TAIHEI KINZOKU KOGYO ) 26 September 1980
- Leaflets of Wall Colmonoy Corporation, 30261 Stephenson, Michigan (US) "Colmonoy Spraywelder" , 1986"Colmonoy Technical data sheet, Colmonoy No. 70", 1989

## Description

The present invention relates to high temperature corrosion resistant hard surfacing alloys which are of extremely high hardness. More particularly, the present invention relates to hard surfacing alloys which contain tungsten carbide, chromium carbide and bi-metallic tungsten chromium carbide precipitates which are precipitated in the alloy and are thus bound in the hard surfacing alloy. Alloys of the present invention produce superior surfaces for improved wear in high temperature high corrosive environments such as glass mould plungers and the like.

Plungers used in glass moulding are eased to some of the most extreme and corrosive environments which are found in modern industry. These plungers are subjected to hundreds of thousands of high impact high temperature plunging operations in the glass moulding industry. In the past, these plungers have been a source of down time in that they are subject to rapid wear. Also, plungers used in the glass mould industry must have surfaces of very low porosity to provide the proper surface in the final finished glass piece. Thus, improper wearing of plunger surfaces mandates repair or replacement. Prior alloys used for surfacing of glass mould plungers have demonstrated "hot wiping" of the alloys from the glass plunger surface. This condition reduced longevity in that the surface alloy was worn away creating out of specification conditions requiring replacement and/or repair.

It has been known that if hard surfacing alloys could be achieved which have high Rockwell C hardnesses of greater than 50, such an alloy would greatly increase longevity of these plungers. However, such alloys have not been readily available in the prior art.

Because of such high Rockwell C hardness requirements it has been generally recognized that materials containing carbides such as tungsten carbides and the like would be advantageous in such alloys.

In other applications, high hardness alloys have been successfully utilized using sintered cobalt structures employing tungsten carbide particles which are encapsulated therein. These cobalt sintered structures rely on the encapsulation of tungsten carbide particles in the alloy to produce high hardness type alloys in the ranges necessary for glass mould plungers. Such alloys are known and have been used in other applications, however, when these alloys are used in glass plunger applications it was found that the final plunger produced by such an alloy was not suitable for a glass plunger application due to the porosity of the alloy produced. Such porosity is undesirable as stated above. Additionally, because of the extreme working conditions in glass plunger applications extraordinary quantities of tungsten carbides would need to be utilized. The sintered type structures have not been found to readily accommodate such high quantities of tungsten carbides.

Sintered structures also are prone to loss of the critical tungsten carbide particles under use, apparently due to the relatively "loose" encapsulation of tungsten carbides in the structure. Thus, as these structures wear the tungsten carbide particles tend to dislodge from the structure reducing the hardness of the structure.

Thus, it has been a goal in the art to provide a high hardness surfacing alloy which contains high quantities of tungsten carbide particles and the like and which has low porosity characteristics.

GB-A-2205583 discloses a nickel based alloy which comprises mainly of carbon, silicon, chromium, tungsten and copper, but containing no more than 1% boron (which is added to improve the workability of pulverisation).

GB-A-791229 describes an alloy for hard surfacing composed of 11% to 15% chromium, 2.5% to 3.5% boron, 3% to 5% silicon, 0.3% to 5% iron and 14% to 17% tungsten, 0.5% to 1.2% carbon, the remainder being nickel and incidental impurities. The composition thus may be that of the invention. There is however, no disclosure or suggestion of heat treatment of the alloy at an elevated temperature.

A hard surfacing alloy "Colmonoy 70" to be applied by spraying and fusing and having a composition like that of the invention is disclosed in Proprietor's own leaflets titled "Colmonoy".

We have devised an improved nickel based hard surfacing alloy, for which the composition parameters are as follows:
tungsten in an amount of 12% to 20% by weight, chromium in an amount of 14% to 30% by weight, boron in an amount of 2% to 5% by weight, carbon in an amount of 0.5% to 1% by weight, a melting point depressing amount of silicon, a ductility increasing amount of iron, the balance being nickel and incidental impurities.

According to the present invention the alloy constituents are melted at a temperature in the range of 2800°F (1538°C) to 3200°F (1760°C); the melt is atomised at a temperature in the said range and the atomised melt is rapidly solidified melt to form a powdered alloy containing the carbon in precipitated form as tungsten carbide, chromium carbide and bimetallic tungsten chromium carbide. The powdered alloy is then applied as a hard surfacing layer such that the carbides are dispersed throughout and metallurgically bonded in the metal matrix of the alloy constituting the layer; the said layer includes
( i) crystals of the bimetallic tungsten chromium carbide such that 10% to 15% of the surface area of the layer comprises the crystals of bimetallic tungsten chromium carbide, with precipitated chromium carbide in the crystals; and
(ii) precipitated tungsten carbide particles dispersed throughout the remainder of the layer, the precipitated tungsten carbide particles being substantially smaller than the crystals of bimetallic tungsten chromium carbide.

Typically, 35% to 50% of the surface area of the alloy layer is in the form of tungsten carbide and chromium carbide. Preferably, the tungsten chromium carbide has a particle size in the range of 25 to 100µm.

The presence of boron acts to increase the self fluxing properties of the alloy. Also incorporated in the alloy are melting point depressants to provide an effective hard surfacing layer. Typically, silicon is present in an amount from 2% to 5% (more preferably 3.5 to 5%) by weight; the silicon acts to depress the melting point of the alloy and adding oxidation resistance to the alloy. Pure silicon can be obtained from Elkem Metals Co. of Marietta, Ohio, and may be used in a composition used according to the present invention.

Iron is provided in order to improve ductility of the final alloy and thus improving the impact resistance of the alloy. Typically iron is present is an amount of from 2% to 5% (more preferably 3% to 4%) by weight. Carbon is present in the alloy according to the invention in an amount in the range from 0.5% to 1% by weight.

Nickel-based hard surfacing layers manufactured according to the invention have a Rockwell C hardness greater than 50 (typically not more than 70), preferably from about 58 to 65. The layers typically comprise a nominal composition from 15% to 18% tungsten, from 14% to 18% chromium, from 3% to 4% of iron, from 3.5% to 5% silicon, from 2.5% to 4% boron, and 0.5% to 1% carbon, the balance being nickel and impurities.

In carrying out the process according to the present invention, a mixture is formulated which comprises 12% to 20% by weight tungsten, from 14% to 30% by weight chromium, 2 to 5% by weight boron, carbon in an amount of 0.5% to 1% by weight, as well as silicon and iron, the balance comprising nickel. The mixture is then alloyed together by heating the mixture to a temperature in the range of 2800°F (1538°C) to 3200°F (1760°C) in order to provide the necessary conditions for carbide formation. The alloys are viscous even at these melt temperatures. The resulting molten mixture is then atomised at a temperature in the abovementioned range of 2800°F (1538°C) to 3200°F (1760°C), with rapid solidification so as to produce a powdered alloy containing the precipitated carbides.

It is preferred that the temperature is greater than from 2800°F to 3000°F (1538°C to 1649°C) prior to atomisation. Typically, 2% to 5% silicon is added to the melt immediately prior to atomisation.

Typically, powders obtained following step (b) have sizes of from about 140 to about 400 mesh (0.105mm to 0.034mm) and preferably 170 to about 325 mesh (0.088 to 0.044mm). These powders are formed by heating the ingredients at temperatures in the range of 2800°F (1538°C) to 3400°F (1871°C), typically using a Krupp 4a or other type rapid solidification nozzle to rapidly solidify these particles from this temperature which results in precipitation of carbides. Such conditions, with high concentrations of the chromium, carbon and tungsten, facilitate the formation of the tungsten chromium carbide crystals.

When the process according to the invention is used for the manufacture of glass plunger parts, substantially no "hot wiping" occurs on plungers up to the useful life of prior art type plungers (approximately 635,000 bottles) and beyond. Glass plungers obtained according to the invention stay hard up to and above 1850°F (1010°C). Hard surfacing layers obtained according to the invention are substantially free from softening or corrosion at these temperatures and have very good resistance even under the extreme conditions of glass moulding operations.
Figure 1 is a photomicrograph taken at a magnification of X 1880, of a layer made in accordance with the teachings of the present invention, showing the bi-metallic tungsten chromium carbide crystalline particle and the distribution of tungsten carbides and chromium carbides in the alloy; and
Figure 2 is a photomicrograph taken at magnification of X 2520 which shows a typical sintered tungsten structure showing the undesirable porosity of prior art structures.

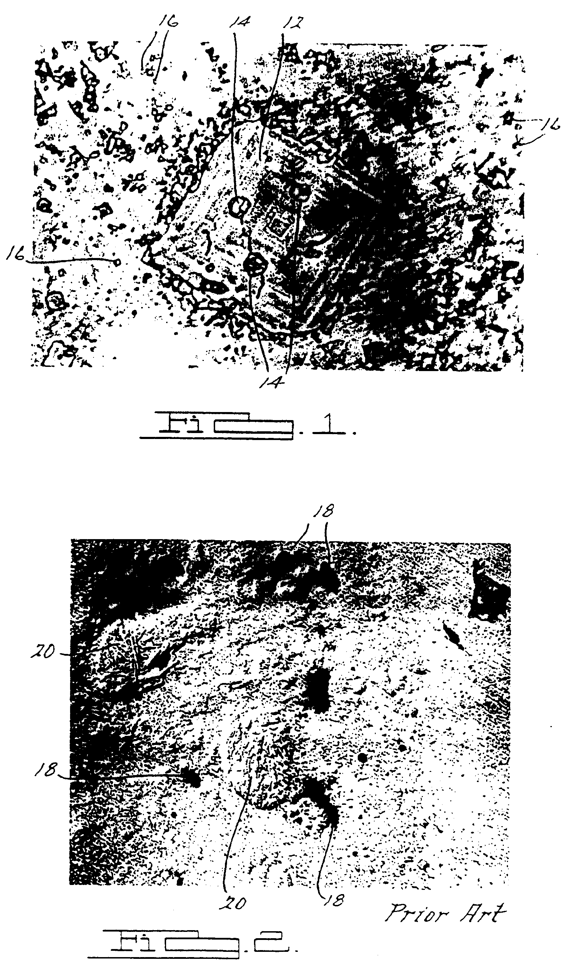

Referring now to Figure 1, critical in the present invention are the existence of precipitated tungsten carbide crystals, chromium carbide crystals, and tungsten chromium carbide crystals. These crystals may be best identified by size and shapes therein. For instance, the larger rectangular shaped crystal 12 is the bi-metallic chromium tungsten carbide crystal. The bi-metallic tungsten chromium carbide crystal 12 is typical of the present invention and also includes a number of chromium carbide precipitate crystals 14 therein which are of a smaller magnitude than the larger particles 12 and have a characteristic hexagonal shape. Tungsten carbide precipitate crystals 16 which are interspersed throughout the remainder of the metal are the smallest of the crystalline constituents.

The larger bi-metallic particles 12 typically are from about 25 to 100 microns across with preferably sizes being in the 40 to 50 micron range. These bi-metallic particles have hardnesses of about 2050 on the Vickers hardness scale.

The smaller chromium carbide particles 14 and tungsten carbide crystals 16 range in size from about 1 to about 10 microns with the chromium carbide crystals being at the upper end of that range and the tungsten carbide crystals at the lower end of that range. The tungsten carbides have hardnesses of about 2400 and the chromium carbides of about 1600 on the Vickers hardness scale. In the process of the present invention, the chemistry and temperature of the melt time is controlled for precipitation of these crystals such that from about 10% to 15% of the surface area of the alloy is populated with the larger bi-metallic tungsten chromium carbide crystals 12. It is preferred that approximately from about 35% to 50% of the total composition is tungsten carbide and chromium carbide type precipitates.

It is critical in the present invention that these carbide crystals are precipitated in the alloy such that they are metallurgically bonded in the alloy and provide a much smoother low porosity surface than the prior art shown in Figure 2. Thus, a layer produced according to the present invention generally has low porosity ranges such that no porosity is visible at a magnification of at least times 10. As shown in Figure 2, the porosity of the prior art sintered tungsten carbide structure is readily notable. In this structure blackened areas 18 indicate the existence of unacceptable porosity and also the tungsten carbide containing areas 20 are very coarse in nature. In contrast, Figure 1, which depicts an alloy obtained according to the present invention, has no visible porosity, even at the X 1880 magnification. Thus, hard surfacing layers of the present invention are extremely well suited for low porosity type applications.

In a preferred embodiment of the process of the present invention, the nickel constituent is utilised in the form of a pure pelletised nickel (such as that obtained from INCO International Co. of Saddle Brook, New Jersey). The nickel is initially melted in a furnace utilising about 1/3 of the amount of weighed nickel boron. Thus, a portion of the nickel concentration comes from the addition of nickel boron (such as that obtained through Shield Alloy of South Holland, Illinois or SKW Metals & Alloys of Niagara Falls, New York). The boron constituent acts as a melting point depressant, hardening agent and a flux in the alloys of the present invention. After melting this initial charge completely, the entire amount of tungsten is added to the melt and completely dissolved. Thereafter the remaining elements are added and dissolved with the constituent being added immediately prior to atomisation.

Further understanding of the present invention will be had from the following examples which are given herein for purposes of illustration but not limitation.

### Example I

In the present example the weights of constituents and aimed for percentages are set form below in Table I.

**Table I**

| Aim Percent | | Weight (lbs.) & (gms) | |
|---|---|---|---|
| Boron¹ | 2.50 % | 1.430 lbs. | 649 gms. |
| Carbon² | 0.65 % | 0.065 lbs. | 30 gms. |
| Chromium³ | 14.00 % | 1.400 lbs. | 636 gms. |
| Iron⁴ | 3.00 % | 0.300 lbs. | 136 gms. |
| Silicon⁵ | 3.50 % | 0.350 lbs. | 159 gms. |
| Tungsten⁶ | 16.00 % | 1.600 lbs. | 726 gms. |
| Nickel⁷ | 60.35 % | 4.855 lbs. | 2294 gms. |

| | | | |
|---|---|---|---|
| ¹ Source of boron is nickel boron usually containing approximately 17.50% boron obtained from Shieldalloy Corporation of South Holland, Illinois. | | | |
| ⁷ The nickel contained in nickel boron is already subtracted from the amount of pure nickel obtained from INCO International Co. of Saddle Brook, New Jersey. | | | |
| ² Carbon (graphite flake) in the obtained from Cummingsmoore Graphite, Co. of Detroit, Michigan. | | | |
| ³ Aluminothermic grade chromium Shieldalloy Corporation of South Holland, Illinois. | | | |
| ⁴ Pure Iron obtained from Armco Steel Corporation of Middletown, Ohio. | | | |
| ⁵ Pure silicon obtained from Elkem Metals Company of Marietta, Ohio. | | | |
| ⁶ Pure tungsten obtained from Kaichen's Metal Mart of Paramount, California. | | | |

A 10 pound (4630 g) melt of the alloy was prepared in accordance with the following procedure. The entire amount of nickel and 1/3 of the amount of nickel boron was placed in a zirconium oxide crucible in an INDUCTOTHERM® induction melt furnace and heated to a temperature of about 2500°F (1371°C). The temperature was maintained until complete melting of the nickel and nickel boron occurs. Thereafter, the entire quantity of tungsten was added and allowed to dissolve into the melt for about 20 minutes, until completely dissolved in the melt. Thereafter, the remainder of the constituents were added, with the temperature increased to about 2800°F (1538°C) to prepare for atomization, a Krupp type 4a nozzle with a gap of 0.15" (0.38 mm) was used at a nozzle pressure of about 500 psi (3447 kPa) to produce a 325 (0.044) mesh powder. The resulting alloy was found to contain bi-metallic carbide, tungsten carbide and chromium carbide crystals throughout.

A Wall Colmonoy SPRAYWELDER™ type thermal spray applicator is used to hard surface a glass mold plunger. The resulting hard surface coating is found to be very low in porosity and is resistant to hot wiping in a glass moulding manufacturing operation.

### Example II

In the present example the weights of constituents and aimed for percentages are set forth below in Table II.

**Table II**

| Aim Percent | | Weight (lbs.) & (gms.) | |
|---|---|---|---|
| Boron¹ | 3.50 % | 2.040 lbs. | 925 gms. |
| Carbon² | 0.95 % | 0.095 lbs. | 43 gms. |
| Chromium³ | 18.00 % | 1.800 lbs. | 817 gms. |
| Iron⁴ | 4.00 % | 0.400 lbs. | 182 gms. |
| Silicon⁵ | 5.00 % | 0.500 lbs. | 227 gms. |
| Tungsten⁶ | 18.00 % | 1.800 lbs. | 817 gms. |
| Nickel⁷ | 50.55 % | 3.365 lbs. | 1528 gms. |

| | | | |
|---|---|---|---|
| ¹ Source of boron is nickel boron usually containing approximately 17.50% boron obtained from Shieldalloy Corporation of South Holland, Illinois. | | | |
| ⁷ The nickel contained in nickel boron is already subtracted from the amount of pure nickel obtained from INCO International Company of Saddle Brook, New Jersey. | | | |
| ² Carbon (graphite flake) in the obtained from Cummingsmoore Graphite, Company of Detroit, Michigan. | | | |
| ³ Aluminothermic grade chromium Shieldalloy of South Holland, Illinois. | | | |
| ⁴ Pure Iron obtained from Armco Steel Corporation of Middletown, Ohio. | | | |
| ⁵ Pure silicon obtained from Elkem Metals Company, Marietta, Ohio. | | | |
| ⁶ Pure tungsten obtained from Kaichen's Metal Mart of Paramount, California. | | | |

A 10 pound (4630 g) melt of the alloy was prepared in accordance with the following procedure. The entire amount of nickel and 1/3 of the amount of nickel boron was placed in a zirconium oxide crucible in an INDUCTOTHERM® induction melt furnace and heated to a temperature of about 2500°F (1371°C). The temperature was maintained until complete melting of the nickel and nickel boron occurs. Thereafter, the entire quantity of tungsten was added and allowed to dissolve into the melt for about 20 minutes, until completely dissolved in the melt. Thereafter, the remainder of the constituents were added, with the exception of silicon, and allowed to melt completely. The silicon was then added to the melt. With the temperature increased to about 2800°F (1538°C) to prepare for atomization, a Krupp type 4a nozzle with a gap of 0.15" (0.38 mm) was used at a nozzle pressure of about 500 psi (3447 kPa) to produce a 325 (0.044) mesh powder. The resulting alloy was found to contain bi-metallic carbide, tungsten carbide and chromium carbide crystals throughout.

A Wall Colmonoy SPRAYWELDER™ type thermal spray applicator is used to hard surface a glass mold plunger. The resulting hard surface coating was found to be very low in porosity and is resistant to hot wiping in a glass moulding manufacturing operation.

### Example III

In the present example the weights of constituents and aimed for percentages are set forth below.

**Table III**

| Aim Percent | | Weight (lbs.) & (gms.) | |
|---|---|---|---|
| Boron¹ | 3.00 % | 1.750 lbs. | 793 gms. |
| Carbon² | 0.80 % | 0.080 lbs. | 36 gms. |
| Chromium³ | 15.00 % | 1.500 lbs. | 681 gms. |
| Iron ⁴ | 3.50 % | 0.350 lbs. | 159 gms. |
| Silicon⁵ | 4.00 % | 0.400 lbs. | 182 gms. |
| Tungsten⁶ | 17.25 % | 1.725 lbs. | 783 gms. |
| Nickel⁷ | 56.45 % | 4.195 lbs. | 1.905 gms. |

| | | | |
|---|---|---|---|
| ¹ Source of boron is nickel boron usually containing approximately 17.50% boron obtained from Shieldalloy Corporation of South Holland, Illinois. | | | |
| ⁷ The nickel contained in nickel boron is already subtracted from the amount of pure nickel obtained from INCO International of Saddle Brook, New Jersey. | | | |
| ² Carbon (graphite flake) obtained from Cummingsmoore Graphite, Company of Detroit, Michigan. | | | |
| ³ Aluminothermic grade chromium Shieldalloy Corporation of South Holland, Illinois. | | | |
| ⁴ Pure Iron obtained from Armco Steel Corporation of Middletown, Ohio. | | | |
| ⁵ Pure silicon obtained from Elkem Metals Company of Marietta, Ohio. | | | |
| ⁶ Pure tungsten obtained from Kaichen's Metal Mart of Paramount, California. | | | |

A 10 pound (4630 g) melt of the alloy was prepared in accordance with the following procedure. The entire amount of nickel and 1/3 of the amount of nickel boron was placed in a zirconium oxide crucible in an INDUCTOTHERM® induction melt furnace and heated to a temperature of about 2500°F (1371°C). The temperature was maintained until complete melting of the nickel and nickel boron occurs. Thereafter, the entire quantity of tungsten was added and allowed to dissolve into the melt for about 20 minutes, until completely dissolved in the melt. Thereafter, the remainder of the constituents were added, with the exception of silicon, and allowed to melt completely. The silicon was then added to the melt. With the temperature increased to about 2800°F (1538°C) to prepare for atomization, a Krupp type 4a nozzle with a gap of 0.15" (0.38 mm) was used at a nozzle pressure of about 500 psi (3447 kPa) to produce a 325 (0.044) mesh powder. The resulting alloy was found to contain bi-metallic carbide, tungsten carbide and chromium carbide crystals throughout.

A Wall Colmonoy SPRAYWELDER™ type thermal spray applicator is used to hard surface a glass mold plunger. The resulting hard surface coating was found to be very low in porosity and is resistant to hot wiping in a glass moulding manufacturing operation. The alloy was found to have a hardness of about 64 on the Rockwell C scale.

### Example IV

Hard surfacing alloys are prepared in accordance with the procedure of Example III utilizing: in a first alloy 12% tungsten, 36% chromium, 2% boron, 2% iron, 2% silicon and .5% carbon, balance nickel; and in a second alloy 20% tungsten, 13% chromium, 5% baron, 5% iron, 5% silicon, 1% carbon and the balance nickel. The resulting powders include tungsten carbide, chromium carbide and bi-metallic tungsten and chromium carbide crystals metallurgically bound therein.

A first glass mould plunger is hard surfaced with the first alloy. A second glass mould plunger is hard surfaced with the second alloy. The resulting surface of both glass mould plungers is found to have a hardness of greater than 50 and are low in porosity.

## Claims

1. A process of manufacture of a nickel based hard surfacing layer having a Rockwell C hardness greater than 50, which process comprises:
(a) melting at a temperature in the range of 2800°F (1538°C) to 3200°F (1760°C) a mixture comprising tungsten in an amount of 12% to 20% by weight,
chromium in an amount of 14% to 30% by weight,
boron in an amount of 2% to 5% by weight,
carbon in an amount of 0.5% to 1% by weight,
a melting point depressing amount of silicon, and
a ductility increasing amount of iron,
the balance being nickel, incidental ingredients and impurities;
(b) atomising said melt at a temperature in said range and rapidly solidifying the atomised melt to form a powdered alloy containing said carbon in precipitated form as tungsten carbide, chromium carbide and bimetallic tungsten chromium carbide; and
(c) applying said powdered alloy as a hard surfacing layer such that said carbides are dispersed throughout and metallurgically bonded in the metal matrix of the alloy constituting said layer, and that said layer includes
( i) crystals of said bimetallic tungsten chromium carbide such that 10% to 15% of the surface area of said layer comprises said crystals of bimetallic tungsten chromium carbide, with precipitated chromium carbide in said crystals; and
(ii) precipitated tungsten carbide particles dispersed throughout the remainder of said layer, said precipitated tungsten carbide particles being substantially smaller than said crystals of bimetallic tungsten chromium carbide.

2. A process according to claim 1, in which 35% to 50% of the surface area of said layer is populated by said tungsten carbide and chromium carbide.

3. A process according to claim 1 or 2, wherein said crystals of said bimetallic tungsten chromium carbide have a particle size in the range 25 to 100µm.

4. A process according to any of claims 1 to 3, wherein said iron is present in an amount from 2% to 5% by weight.

5. A process according to any of claims 1 to 4, wherein said silicon is added to the melt of step (a) in an amount from 2% to 5% by weight, immediately prior to said atomisation.

6. A process according to any of claims 1 to 5, wherein said hard surfacing layer has a Rockwell C hardness of not more than 70 and comprises in its nominal composition from 15% to 18% tungsten, from 14% to 18% chromium, from 3% to 4% of iron, from 3.5% to 5% silicon and from 2.5% to 4% boron.

7. A process according to any of claims 1 to 6, wherein said temperature is 2800°F to 3000°F (1538°C to 1649°C).

8. A process according to any of claims 1 to 7, wherein said layer is applied to a plunger for use in glass moulding.

## Patentansprüche

1. Verfahren zur Herstellung einer harten Schutzüberzugsschicht auf Nickelbasis und mit einer Rockwell-C-Härte, die größer ist als 50, umfassend:
(a) bei einer Temperatur im Bereich von 2800°F (1538°C) bis 3200°F (1760°C) Schmelzen einer Mischung, umfassend
Wolfram in einer Menge von 12 Gew.-% bis 20 Gew.-%,
Chrom in einer Menge von 14 Gew.-% bis 30 Gew.-%,
Bor in einer Menge von 2 Gew.-% bis 5 Gew.-%,
Kohlenstoff in einer Menge von 0,5 Gew.-% bis 1 Gew.-%,
eine den Schmelzpunkt erniedrigende Menge an Silizium und
eine die Duktilität erhöhende Menge an Eisen,
wobei der Rest aus Nickel, zufälligen Bestandteilen und Verunreinigungen besteht;
(b) Zerstäuben (Verdüsen) der besagten Schmelze bei einer Temperatur im besagten Bereich und schnelles Verfestigen der zerstäubten Schmelze, um eine gepulverte Legierung zu bilden, die den besagten Kohlenstoff in präzipitierter Form als Wolframcarbid, Chromcarbid und bimetallisches Wolfram-Chrom-Carbid enthält; und
(c) Applizieren der besagten gepulverten Legierung als harte Schutzüberzugsschicht, derart,
daß die besagten Carbide in der Metallmatrix der Legierung, die die besagte Schicht bildet, dispergiert und metallurgisch in diese Metallmatrix eingebunden sind, und
daß die besagte Schicht enthält
(i) Kristalle des besagten bimetallischen Wolfram-Chrom-Carbids, so daß 10 bis 15 % des Oberflächenbereichs der besagten Schicht die besagten Kristalle aus bimetallischem Wolfram-Chrom-Karbid umfaßt, mit präzipitiertem Chromcarbid in den besagten Kristallen; und
(ii) präzipitierte Wolframcarbid-Partikel, die im Rest der besagten Schicht dispergiert sind, wobei die besagten Wolframcarbid-Partikel wesentlich kleiner als die besagten Kristalle aus bimetallischem Wolfram-Chrom-Carbid sind.

2. Verfahren nach Anspruch 1, in dem 35 bis 50 % des Oberflächenbereichs der besagten Schicht durch das besagte Wolframcarbid und Chromcarbid besiedelt (populiert) sind.

3. Verfahren nach Anspruch 1 oder 2, in dem die besagten Kristalle des besagten bimetallischen Wolfram-Chrom-Carbid eine Partikelgröße im Bereich von 25 - 100µm besitzen.

4. Verfahren nach einem der Ansprüche 1 - 3, in dem das besagte Eisen in einer Menge von 2 - 5 Gew.-% vorhanden ist.

5. Verfahren nach einem der Ansprüche 1 - 4, in dem das besagte Silizium der Schmelze gemäß Schritt (a) in einer Menge von 2 - 5 Gew.-% zugesetzt wird, unmittelbar vor der besagten Zerstäubung.

6. Verfahren nach einem der Ansprüche 1 - 5, in da die besagte harte Schutzüberzugsschicht eine Rockwell-C-Härte von nicht mehr als 70 besitzt und in ihrer nominellen Zusammensetzung zwischen 15 und 18 % Wolfram, zwischen 14 und 18 % Chrom, zwischen 3 und 4 % Eisen, zwischen 3,5 und 5 % Silizium und zwischen 2,5 und 4 % Bor umfaßt.

7. Verfahren nach einem der Ansprüche 1 - 6, in dem die besagte Temperatur zwischen 2800°F und 3000°F (1538°C und 1649°C) liegt.

8. Verfahren nach einem der Ansprüche 1 - 7, in dem die besagte Schicht auf einen Kolben zur Verwendung beim Glasgießen (Glas-Pressformen) appliziert wird.

## Revendications

1. Procédé de fabrication d'une couche de rechargement dure à base de nickel ayant une dureté Rockwell C supérieure à 50, ledit procédé comprenant les étapes consistant à:
(a) faire fondre à une température dans la gamme de 2 800°F (1 538°C) à 3 200°F (1 760°C) un mélange comprenant
du tungstène en quantité de 12% à 20% en poids,
du chrome en quantité de 14% à 30% en poids,
du bore en quantité de 2% à 5% en poids,
du carbone en quantité de 0,5% à 1% en poids,
une quantité de silicium abaissant le point de fusion, et
une quantité de fer élevant la ductilité,
le restant étant du nickel, des ingrédients accidentels et des impuretés;
(b) atomiser ladite masse en fusion à une température dans ladite gamme et solidifier rapidement la masse fondue atomisée pour former un alliage en poudre contenant ledit carbone sous forme d'un précipité de carbure de tungstène, de carbure de chrome et de carbure bimétallique de tungstène et de chrome; et
(c) appliquer ledit alliage en poudre, en tant que couche de rechargement dure, de telle sorte que lesdites carbures soient complètement dispersés et soudés métallurgiquement dans la matrice métallique de l'alliage constituant ladite couche, et en ce que ladite couche contient
(i) des cristaux dudit carbure bimétallique de tungstène et de chrome, tels que 10% à 15% de la surface de ladite couche comprennent lesdits cristaux de carbure bimétallique de tungstène et de chrome, avec du carbure de chrome précipité dans lesdits cristaux; et
(ii) des particules de carbure de tungstène précipitées, dispersées dans tout le reste de ladite couche, lesdites particules de carbure de tungstène précipitées étant sensiblement plus petites que lesdits cristaux dudit carbure bimétallique de tungstène et de chrome.

2. Procédé selon la revendication 1, dans lequel 35% à 50% de la surface de ladite couche sont occupés par ledit carbure de tungstène et ledit carbure de chrome.

3. Procédé selon la revendication 1 ou 2, dans lequel lesdits cristaux dudit carbure bimétallique de tungstène et de chrome ont une granulométrie dans la gramme de 25 à 100 µm.

4. Procédé selon l'une quelconque des revendications 1 à 3, dans lequel ledit fer est présent à raison de 2% à 5% en poids.

5. Procédé selon l'une quelconque des revendications 1 à 4, dans lequel ledit silicium est ajouté à la masse fondue de l'étape (a) en quantité de 2% à 5% en poids, immédiatement avant ladite atomisation.

6. Procédé selon l'une quelconque des revendications 1 à 5, dans lequel ladite couche de rechargement dure possède une dureté Rockwell C non supérieure à 70 et comprend, dans sa composition nominale, de 15% à 18% de tungstène, de 14% à 18% de chrome, de 3% à 4% de fer, de 3,5% à 5% de silicium et de 2,5% à 4% de bore.

7. Procédé selon l'une quelconque des revendications 1 à 6, dans lequel ladite température est de 2 800°F à 3 000°F (1 538°C à 1 649°C).

8. Procédé selon l'une quelconque des revendications 1 à 7, dans lequel ladite couche est appliquée sur un poinçon à utiliser dans le moulage du verre.
